# NEW EUROPEAN PATENT SPECIFICATION

(11) **EP 3 838 369 B2**
(45) Date of publication and mention of the opposition decision: **22.10.2025**
(45) Mention of the grant of the patent: 04.01.2023
(21) Application number: 19218274.9
(22) Date of filing: 19.12.2019
(51) Int. Cl.: B01D 25/164, B01D 25/34

(54) **LIFTING SYSTEM FOR A FILTER PRESS AND A METHOD OF AUTOMATICALLY LIFTING ONE OR MORE FILTER SUPPORT MEMBERS FROM A FILTER PRESS**
HUBSYSTEM FÜR EINE FILTERPRESSE UND VERFAHREN ZUM AUTOMATISCHEN ANHEBEN EINES ODER MEHRERER FILTERSTÜTZELEMENTE AUS EINER FILTERPRESSE
SYSTÈME DE LEVAGE POUR UN FILTRE-PRESSE ET PROCÉDÉ DE LEVAGE AUTOMATIQUE D'UN OU PLUSIEURS ÉLÉMENTS DE SUPPORT DE FILTRE D'UN FILTRE-PRESSE

(43) Date of publication of application: 23.06.2021
(73) Proprietor: Metso Outotec Finland Oy, 33900 Tampere (FI)
(72) Inventor: GRÖNVALL, Lars, 231 31 Trelleborg (SE); JOHANSSON, Erik Sven, 733 33 Sala (SE)
(74) Representative: Hoffmann Eitle

(56) References cited:
- CN-A- 105 413 268
- DE-A1- 2 715 781
- JP-A- S54 105 370
- DIEMME FILTRATION - A BRAND OF AQSEPTENCE GROUP: "3D Animation Overhead Beam Filter Press mod. GHT F", YOUTUBE, 10 September 2018 (2018-09-10), XP093134654, Retrieved from the Internet <URL:https://www.youtube.com/watch?v=qg8aZn7cuLs> [retrieved on 20240226]
- OUTOTECOYJ: "Outotec Larox FFP Filtration Plant", YOUTUBE, 17 March 2017 (2017-03-17), XP093134656, Retrieved from the Internet <URL:https://www.youtube.com/watch?v=D4IUD7VWiIU> [retrieved on 20240226]

## Description

### TECHNICAL FIELD

The present invention refers to a lifting system for a filter press and a method of automatically lifting one or more filter support members to and from a filter press.

### BACKGROUND OF THE INVENTION

One method of filtering slurries having relatively high concentrations of solid matter uses an apparatus known as a filter press, which operates under a displacement filtering principle. The filter press typically utilizes a series of filter plates which are placed adjacent to one another with an intermediate pair of filter cloth portions. Each filter plate has a central shallow recess extending across a portion of its major surface. The recess is delimited by a flat contact surface which surrounds the recess. A closing pressure is exerted on the series of filter plates sealing them tightly together by the contact surfaces of two subsequent filter plates abutting each other in a sealing manner, thereby also clamping the pair filter cloth portions between said contact surfaces. A gap between the two filter cloth portions, a so called filter chamber, in a first pair of filter cloth portions is allowed to communicate with corresponding gaps which are formed between the filter cloth portions in adjacent pairs of filter plates. The communication is allowed via one or more inlet channels which are formed by aligned throughgoing inlet openings in the thus formed series of filter plates and filter cloth portions. To ensure a continuous inlet channel, each filter cloth may on its surface facing the recess be provided with a sealing member which is configured to sealingly abut a wall portion which surrounds the inlet opening in each filter plate. In operation, a slurry such as mineral slurry or pulp which is introduced through inlet channel will fill the gaps between the two filter cloth portions in each pair of filter cloth portions. Thereby the slurry is dewatered to form a cake while the filtrate, i.e. the liquid component may be expelled from an outlet channel. The filter cloth portions of the filter chambers are then activated to compress the filter cakes. This may be made by introducing compressed air or gas to drive out more liquid component by displacing the filter cloth portions in each pair in a direction towards each other. While the solid particulate matter is retained in the filter chamber, the filtrate is led to an outlet where it is discharged. The solid particulate cake remaining in each filter chamber after the filter cycle must be removed in preparation for a subsequent filter cycle. To remove the cake, the closing pressure is relieved, and the filter plates and filter cloth portions are separated, thereby allowing the cake to fall to the ground.

The filter cloth portions are typically formed by fluid permeable thin membranes that are suspended in the interspace between two subsequent filter plates. The filter cloth portions may be any material configured to or suitable to trap solid particles. Due to the clogging and abrasive nature of the solid particles there is a need to replace and/or maintain the filter cloth portions on a regular basis. This is typically made by manually lifting the filter cloth portions in the vertical direction and replacing them with new filter cloth portions. This is very time consuming and requires a downtime of the filter press. Further, it involves a very non-ergonomic and dirty working environment. Additionally, as a measure to reduce the overall footprint of the filter press, without unduly reducing the number of press plates, the interspace between the individual press plate is often strictly limited. This adds to the work of replacing the filter cloth portions without their projecting sealing members engaging the press plates.

CN 105 413 268 A discloses a kind of dehydration technique by using a filter press which allows a quick filter cloth cleaning.

There is hence a need for a simplified, non-manual system to handle, remove and also replace used filter cloth portions.

### SUMMARY OF THE INVENTION

One object of the present invention is to provide a lifting system and method allowing a substantially automatic handling of the filter cloth portions to and from the filter press.

The lifting system and method should be applicable to existing filter presses.

Another object is to provide a lifting system and method that allows an improved working environment and ergonomics for the personnel.

According to a first aspect, a lifting system for a filter press is provided. The lifting system comprises a lifting frame, a filter support member configured to be removably supported by a rail in the filter press, said filter support member being configured to suspend at least two parallelly extending filter cloth portions, and a coupling, wherein the lifting frame is configured to be moved in a direction towards the filter support member into a locking position in which the coupling is configured to be activated thereby interlocking the lifting frame and the filter support member and allowing lifting of the filter support member and the filter cloth portions suspended thereby in a direction away from the rail.

Accordingly, a lifting system is provided which uses a lifting frame to lockingly engage and handle a filter support member to which the filter cloth portions are suspended. The filter support member is removably supported by a rail in the filter press. Thereby, the filter support member with its filter cloth portions may elevated and moved to a position outside the filter press to allow a smooth and ergonomic maintenance/exchange of the filter cloth portions, before moving the filter support member with its filter cloth portion back into the filter press. The lifting system may be remotely and automatically handled by a crane, traverse or any suitable lifting arrangement, whereby the amount of manual work may be reduced to a minimum. Also, the time to remove and replace filter cloth portions may be substantially reduced both in terms of time and work labour. Accordingly, the downtime of the filter press may be substantially reduced. It is to be understood that the coupling also may be used in the reversed order, i.e. to release the locking engagement between the lifting frame and the filter support member when the filter support member is re-positioned in the filter press after maintenance/change of the filter cloth portions.

The lifting frame may comprise a support arrangement supporting a pair of pinching elements, each pinching element being pivotably suspended on the support arrangement to be set from a first position to a second position.

The lifting system may further comprise a setting member. During movement of the lifting frame towards the filter support member, a portion of each pinching element engages the setting member thereby forcing each pinching element to be set from the first position to the second position in which the respective pinching element engages one of the two filter cloth portions thereby displacing the two filter cloth portions in a direction towards each other.

Accordingly, a lifting system is provided which comprises pinching elements which allow a selective engagement with a pair of filter cloth portions which are configured to be hanging by gravity between two filter plates of a filter press in a condition when the filter plates are separated. The pinching elements which are supported by the lifting frame are mechanically operated to be set from a first position in which the pinching elements may be lowered into a position between two separated filter plates to straddle the two filter cloth portions on opposite sides thereof, into a second position in which they engage the filter cloth portions and displace them towards each other to such extent that a lateral clearance is provided between the filter cloth portions and the separated filter plates. Thus, in the displaced position, a gap between the two filter cloth portions may be reduced to such extent that the filter cloth portions with or without any sealing members supported thereby may be lifted upwards without contacting the respective filter plates or with a minimum of contact with the respective filter plates.

Each pinching element may along its longitudinal extension comprise an upper actuation portion and a lower filter engagement portion separated by a pivot, and wherein an insertion opening is arranged between the respective actuation portions in the pair of pinching elements thereby allowing insertion of a free end of the setting member into said insertion opening when the pinching elements are set to the first position.

The width of the insertion opening may be variable by each pinching element being pivotable arranged around its respective pivot. Accordingly, as a result of the pivoting of the pinching element(s), the width of the insertion opening will be adjusted. Thus, when increasing the insertion opening, the width between the opposite ends of the pinching elements will be reduced.

The setting member may be a projection comprising a base portion having a first width and a free end portion facing the lifting frame, said free end portion having a second width being smaller than the first width. By the first and the second widths of the setting member, a cam action will be provided which automatically sets the pinching elements from the first to the second position as the lifting frame is moved towards the filter support member into the locking position.

The setting member may be fixedly mounted to or be integral with the rail of the filter press.

The pinching elements in the pair of pinching elements may be biased in a direction towards the first position. It is preferred that the pair of pinching elements, when set to said first position may straddle the two filter cloth portions without any contact between the pinching elements and the two filter cloth portions or with a very low friction therebetween.

The biasing may be provided by an elastic member which is arranged to act between the pinching elements in the pair of pinching elements. The elastic member may by way of example be a tension spring or a leaf spring. The skilled person will understand that other types of elastic members may be used with remained function.

The elastic member may be encapsulated. The encapsulation restricts or prevents dirt from intruding and impacting the operation of the elastic member.

The pinching elements in the pair of pinching elements may have an extension along the full longitudinal extension of the respective filter cloth, or wherein two or more pairs of pinching elements may be distributed along the longitudinal extension of the filter support member. The number of setting members should be adapted to the number of pairs of pinching elements. Each pair of pinching elements should be configured to be operated by at least one setting element. In the case of one single pair of pinching elements which extends along the full longitudinal extension of the respective filter cloth, it may be preferred to provide at least two setting members in order of ensuring an even distance between the respective pinching elements as seen along the longitudinal extension.

The respective pinching elements may have a length that exceeds the length of the respective filter cloth portion as seen in the longitudinal direction of the support arrangement, and the at least one setting member may be configured to cooperate with end portions of the respective pinching elements which extend past a corresponding free end of the respective filter cloth portion.

Accordingly, the at least one setting member may be arranged in a position outside the filter cloth portions. One setting member may be arranged on each side of the filter support member.

In the event of more than one setting member, it is preferred that these are symmetrically distributed along the filter support member with one setting member on each side of an imaginary plane extending through a centre point of the support arrangement and transverse to the longitudinal extension thereof.

The coupling is a magnetic coupling comprising an electromagnetic member and a magnetic target surface, wherein the electromagnetic member is arranged on the lifting frame and the magnetic target surface is arranged on the filter support member; or wherein the electromagnetic member is arranged on the filter support member and the magnetic target surface is arranged on the lifting frame.

By arranging the electromagnetic member on the lifting frame, necessary wiring required to power the electromagnetic member may be supported by the lifting frame. This facilitates the overall operation of the lifting system since the power may be controlled by the same control system that is used to manoeuvre the lifting frame, such as a crane, traverse or any other suitable lifting arrangement.

The lifting frame or the rail in the filter press may comprise at least one guiding member configured to align the lifting frame with the filter support member when the lifting frame is moved towards the filter cloth support.

The guiding member may by way of example be a V-shaped projection supported by the lifting frame and which is arranged to straddle the rail when lowering the lifting frame. By the V-shape, a self-guiding effect is achieved. The skilled person will realize that the same effect may be achieved if the guiding member is arranged on the rail of the filter press.

One guiding member may be arranged on each side of the filter cloth support. In case of more than one guiding member, it is preferred that these are symmetrically distributed along the longitudinal extension of the support arrangement with one guiding member on each side of an imaginary plane extending through a centre point of the support arrangement and transverse to the longitudinal extension thereof.

The lifting frame may comprise a plurality of support arrangements, each support arrangement supporting a pair of pinching elements. A filter press typically comprises a plurality of filter modules, where each filter module comprises one pair of filter plates with one pair of filter cloth portions suspended therebetween. The lifting frame may be configured to serve a subset of such filter modules, whereby the number of support arrangements may correspond to the number of filter modules in the subset of filter modules.

The pinching elements may be configured to engage the respective filter cloth portion in a position below the rail.

The respective filter cloth portion is configured to hang down by gravity from the rail between two filter plates. The pinching elements may be configured to engage the respective filter cloth portion in an area that allows the respective cloth portion to be displaced towards each other to such extent that a lateral clearance is provided between the respective filter plates and the pair of filter cloth portions. Thus, in the displaced position, the gap between the two filter cloth portions should be reduced to such extent that a pair of filter cloth portions with or without any sealing members supported by the filter cloth portions may be lifted upwards without, or with substantially without contacting the respective filter plates. The pinching elements may be configured to engage such sealing members or be configured to engage a portion above or below such sealing members.

An upper edge portion of the press plates facing the lifting frame may be provided with a bevel. The bevel acts as a guiding portion that facilitates lowering of the lifting frame to allow insertion of the pinching elements in the interspace between the press plates and the filter cloth portions. The bevel may be integral with the press plates or be provided as a cap to be attached to the upper edge portion. The latter may be used as a retro-fit.

According to a second aspect, a lifting system for a filter press is provided. The lifting system comprises a lifting frame, a filter support member configured to be removably supported by a rail in the filter press, and a coupling configured to selectively interlock the lifting frame and the filter support member, wherein
the lifting frame comprises a support arrangement supporting a pair of pinching elements, each pinching element having an extension along a longitudinal direction of the support arrangement, and each pinching element being pivotably suspended on the support arrangement thereby allowing each pinching element to be pivoted around the longitudinal direction of the support arrangement to be set from a first position to a second position;
the filter support member is configured to suspend two parallelly extending filter cloth portions forming an intermediate gap, each filter cloth portion having an extension along the longitudinal direction of the support arrangement; and
at least one setting member;
wherein the lifting frame is configured to be moved in a direction towards the filter support member into a locking position where the pair of pinching elements straddles the two filter cloth portions, during which movement a portion of each pinching element engages the setting member thereby forcing each pinching element to be pivotably set from the first position to the second position in which the respective pinching elements engages one of the two filter cloth portions thereby displacing the two filter cloth portions in a direction towards each other, and
in which locking position the coupling is configured to be activated thereby interlocking the lifting frame and the filter support member and allowing lifting of the filter support member.

Accordingly, a lifting system is provided which comprises pinching elements which allow a selective engagement with a pair of filter cloth portions which are configured to be hanging by gravity between two filter plates of a filter press in a condition when the filter plates are separated. The pinching elements which are supported by a lifting frame are mechanically operated to be set from a first position in which the pinching elements may be lowered into a position between two separated filter plates to straddle the two filter cloth portions on opposite sides thereof, into a second position in which they engage the filter cloth portions and displace them towards each other to such extent that a lateral clearance is provided between the filter cloth portions and the separated filter plates. Thus, in the displaced position, the gap between the two filter cloth portions may be reduced to such extent that the filter cloth portions with or without any sealing members supported thereby may be lifted upwards without contacting the respective filter plates.

According to another aspect, a method of automatically lifting one or more filter support members from a filter press is provided where said filter support member suspends two parallelly extending filter cloth portions. The method comprises the acts of:
providing a lifting frame;
moving the lifting frame in a direction towards the filter support member into a locking position with the lifting frame engaging the filter support member;
activating a coupling thereby providing a locking engagement between the lifting frame and the filter support member; and
elevating the lifting frame and the filter support member, thereby removing the filter support member and the filter cloth portions from the filter press.

The method involves the features and effects that have been discussed with reference to the lifting system. The features and arguments applying to the lifting system are equally applicable to the method. Therefore, to avoid undue repetition, reference is made to the sections above. It is to be understood that the coupling, within the method, may be used in the reversed order, i.e. to release the locking engagement between the lifting frame and the filter support member when the filter support member is re-positioned in the filter press after maintenance/change of the filter cloth portions.

According to the method, the lifting frame may support a pair of pinching elements, each pinching element being configured to be reversible and selectively set from a first position to a second position;
wherein the lifting frame is moved towards the filter support member into a position where the pair of pinching elements straddles the two filter cloth portions; and wherein
each pinching element is set from the first position to the second position in which the respective pinching elements engages one of the two filter cloth portions thereby displacing the two filter cloth portions in a direction towards each other.

Each pinching element may be pivotably suspended on a support arrangement of the lifting frame thereby allowing each pinching element to be pivoted around the longitudinal direction of the support arrangement to be set from the first position to the second position.

A portion of each pinching element in the pair of pinching elements may be configured to engage a setting member during movement of the lifting frame into the position where the pair of pinching elements straddles the two filter cloth portions, thereby forcing each pinching element to be pivotably set from the first position to the second position.

### BRIEF DESCRIPTION OF THE DRAWINGS

The above, as well as additional objects, features and advantages of the present invention, will be better understood through the following illustrative and non-limiting detailed description of embodiments of the present invention, with reference to the appended drawings, where the same reference numerals will be used for similar elements.
Fig. 1 discloses a schematic view of a filter plate arrangement.
Fig. 2 discloses a plurality of filter plate arrangements of the type disclosed in Fig. 1.
Fig. 3 discloses a plurality of filter plate arrangements and a lifting system.
Fig. 4 discloses the overall design of one single support beam will be disclosed.
Figs. 5A-5F discloses the design and operation of the lifting system.

### DETAILED DESCRIPTION OF PREFERRED EMBODIMENTS OF THE INVENTION

The detailed description to follow refers to a lifting system to be used in a filter press which as such is well known in the art to filtrate slurries having relatively high concentrations of solid matter. The filter press of the intended type operates under a displacement filtering principle by utilizing a series of filter plates which are placed adjacent to one another with an intermediate pair of filter cloth portions.

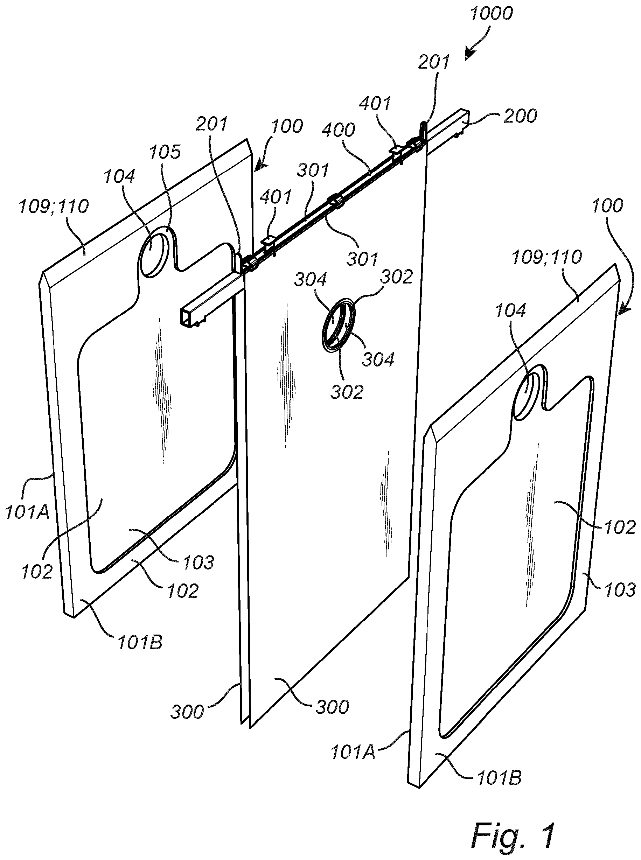

Starting with Fig. 1 one filter plate arrangement 1000 is schematically disclosed. The filter plate arrangement 1000 comprises a pair of two opposing filter plates 100, a rail 200 forming part of the filter press (not disclosed) and a pair of filter cloth portions 300. The two filter cloth portions 300 are suspended on a filter support member 400. The filter support member 400 is an integral part of an inventive lifting system 2000 to be described.

Each filter plate 100 comprises two opposing major surfaces 101A, 101B. Each major surface 101A, 101B is provided with a central shallow recess 102 which has a surface extension across substantially the full major surface 101A, 101B. Each recess 102 is surrounded by a contact surface 103 which extends along the border or the filter plate 100. A throughgoing inlet opening 104 is arranged in the upper edge portion. As is well known in the art, the inner wall portion of the respective recess 102 is preferably provided with a non-disclosed pattern of ridges and/or, dimples and holes. Further, the filter plate 100 is preferably, as seen in its thickness direction, provided with a network of non-disclosed channels communicating with the holes. The dimples, ridges, channels and holes are configured to allow discharge of filtrate from a void which is formed when two such filter plates 100 are moved together when operating the filter press, and also to allow supply of pressurized gas to the void.

An upper edge portion 109 of the press plates may be provided with a bevel 110. The bevel 110 is configured to act as a guiding portion that facilitates lowering of the lifting frame to allow insertion of the pinching elements in the gap between the press plates and the filter cloth portions. This will be discussed below. The bevel 110 may be integral with the press plates or be provided as a cap to be attached to the upper edge portion. The latter may be used as a retro-fit to existing press plates. No matter if it is integral with or a cap, it is understood that the geometry may vary with remained function. In a non-disclosed embodiment, it may by way of example be a radius.

The two filter cloth portions 300 are suspended on the filter support member 400 which in turn is supported on the rail 200 which forms part of the non-disclosed filter press. The filter support member 400 may in its simplest form be arranged to be freely resting on the longitudinal upper edge portion of the rail 200.

The filter support member 400 may be provided as a longitudinal thin element made of metal or plastic.

In the disclosed embodiment each filter cloth portion 300 is suspended on a longitudinally extending bar 301 which in turn is connected to the filter support member 400. The two filter cloth portions 300 are hanging by gravity from the filter support member 400. The respective bar 301 may be arranged to the filter support member by a snap-fit allowing a fast exchange of the filter cloth portions 300. The skilled person realizes that the suspension of the filter cloth portions 300 to the filter support member 400 may be provided for in a number of ways with remained functionality of the invention.

In the disclosed embodiment the two filter cloth portions 300 are formed as two separate portions hanging side by side like curtains in the interspace between the two filter plates 100. It is to be understood that the same effect may be provided by arranging the filter as a U-shaped unit (not disclosed) with two interconnected opposing filter cloth portions.

The filter cloth portions 300 are typically formed by fluid permeable thin membranes. The filter cloth portions 300 may be any material suitable to trap solid particles. As non-limiting examples, the filter cloth portions 300 may be formed by fibrous or textile material or even a metal mesh. The filter cloth portions 300 should be permeable to fluid and gas. It is preferred that the filter cloth portions 300 are flexible.

Each filter cloth portion 300 preferably comprises a sealing member 302 which surrounds a through-going inlet opening 304. The sealing member 302 is arranged on the exterior surface of the filter cloth portion 300 which surface is configured to face a filter plate 100. The sealing member 302 is formed as a projection and may be configured to abut a complementary recess 105 which surrounds the inlet opening 104 in the filter plate 100.

In the disclosed embodiment, the filter support member 400 comprises two magnetic target surfaces 401 facing away from the filter support member 400. The magnetic target surfaces 401 are formed by a magnetic material. The magnetic target surfaces 401 will be further discussed below.

The rail 200 which supports the filter support member 400 and its two filter cloth portions 300 is an integral part of the filter press and may be a so called washing rail which as such is well known in the art of filter presses. The washing rail is a hollow profile configured to be connected to a washing system to allow flushing of the filter cloth portions with a cleaning fluid on a regular basis. The rail 200 is hence configured to be a fixed part in the filter press.

As a part of the inventive lifting system, the rail 200 is provided with a setting member 201. The setting member 201 is fixedly mounted to the rail 200. Alternatively, the setting member 201 may be integral with the wail 200. In the disclosed embodiment, the rail 200 comprises two setting members 201. The setting members 201 and their function will be further described below.

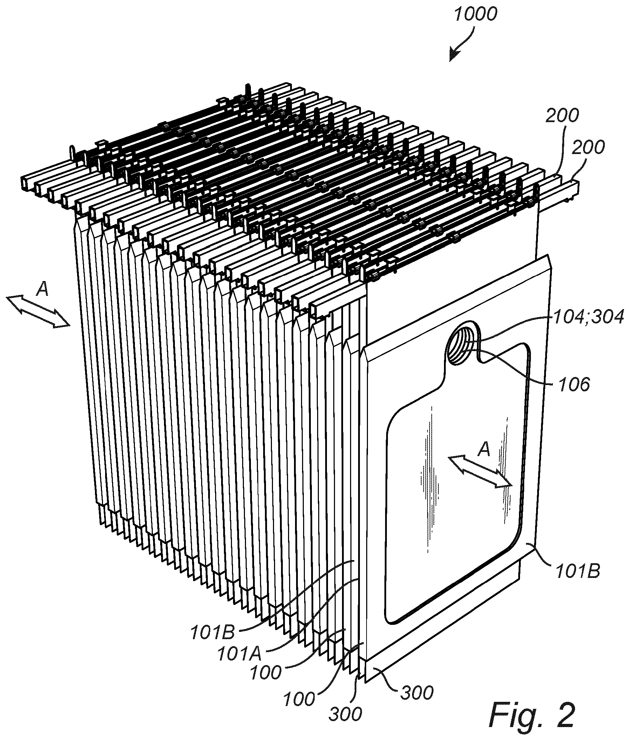

Now turning to Fig. 2, a plurality of filter plate arrangements 1000 of the type disclosed in Fig. 1 and discussed above are disclosed. The plurality of filter plate arrangements 1000 are schematically disclosed as being arranged side by side in a parallel relationship in the same manner as they will be used in a filter press. All parts of the filter press, except for the rails 200 which are fixed thereto are omitted.

The inlet openings 104 in the plurality of filter plates 100 and the inlet openings 304 in the plurality of filter cloth portions 300 are aligned to thereby form a continuous inlet channel 106. The filter plates 100 are configured to be movable mounted in the filter press to, in a cyclic manner, be moved towards each other (see arrow A) to thereby clamp a pair of filter cloth portions 300 between the respective major surfaces 101A, 101B to form voids (not disclosed) which are to be filled with a slurry. The slurry will be trapped between the filter cloth portions 300 in each void. The trapped slurry is dewatered by compressing the filter cloth portions 300 by injection of pressurized air through the respective filter plates 100 into the voids towards the filter cloth portions 300. Finally, the filter plates 100 are moved apart to allow removal of a resulting dehydrated cake (not disclosed) of particulate matter. The cake is arranged to fall to the ground by gravity.

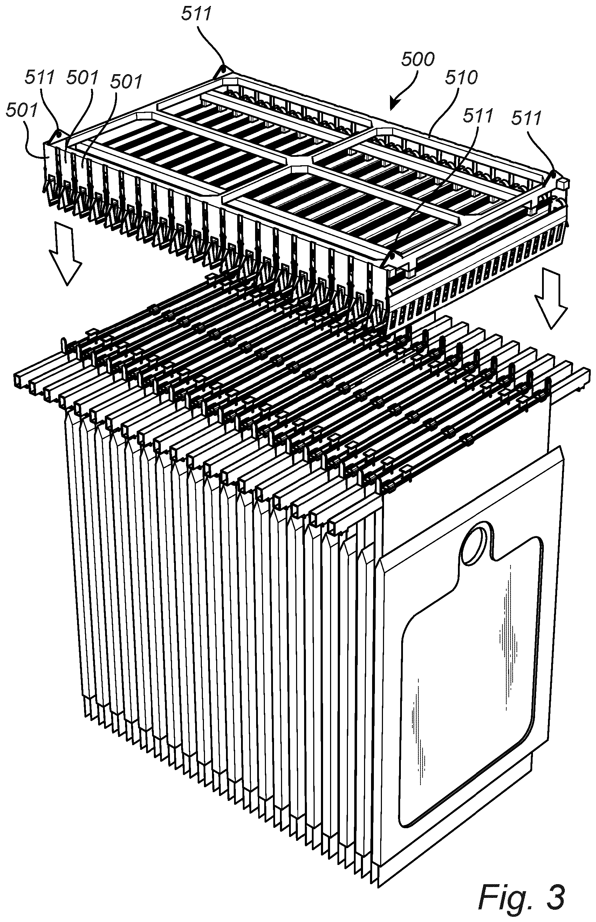

Now turning to Fig. 3, a lifting frame 500 forming part of the inventive lifting system is disclosed. The lifting system is provided to allow maintenance and replacement of the filter cloth portions 300

The lifting frame 500 is disclosed as being arranged in a position above a filter plate arrangement 1000 which is of the type discussed above with reference to Fig. 2. The lifting frame 500 comprises a plurality of support arrangements 501 which are arranged side by side and interconnected by a common frame 510. The frame 502 comprises a plurality of lifting eye bolts 511. The number of lifting eye bolts 511 and their positions may be adapted to the size of the lifting frame 500 and allows the lifting frame 500 to be connected to a traverse, a crane or any suitable lifting arrangement (not disclosed).

In the disclosed embodiment the lifting frame 500 comprises twenty support arrangements 501 and is hence configured to serve a sub-set of twenty pairs of filter panels 100 and their respective pairs of filter cloth panels 300. It is to be understood that the capacity of the lifting frame 500 may be changed within the scope of the invention. The design of the individual support arrangements 501 and their operation will be described in detail below.

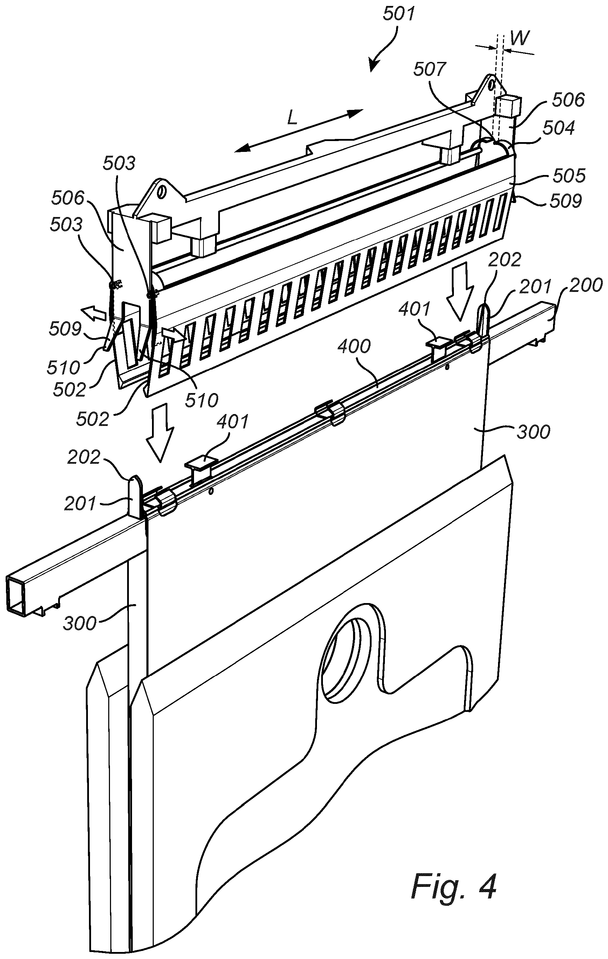

Now turning to Fig. 4, the overall design of one single support arrangement 501 will be disclosed. The support arrangement 501 is arranged to extend in parallel with the rail 200 of the filter press.

The support arrangement 501 supports a pair of pinching elements 502. Each pinching element 502 has an extension along the longitudinal direction L of the support arrangement 501. Each pinching element 502 is pivotably suspended via a pivot 503 on the support arrangement 501 thereby allowing each pinching element 502 to be pivoted around the longitudinal direction L of the support arrangement 501 to be set from a first position to a second position. The first and second positions will be further discussed below.

The pinching elements 502 are disclosed as having an extension along the full longitudinal extension of the respective filter cloth portion 300. It is to be understood that two or more pairs of pinching elements 502 may be arranged side by side along the longitudinal extension of the filter cloth portions 300. The two or more pairs may be arranged side by side contacting each other or be distributed along the longitudinal extension with intermediary gaps.

Each pinching element 502 is formed as a thin sheet member which along its longitudinal extension comprises an upper actuation portion 504 and a lower filter engagement portion 505. The two portions 504, 505 are separated by the pivot 503. The free ends of the pivot 503 are suspended on opposite side wall portions 506 which are arranged on the opposite ends of the support arrangement 501.

The pinching elements 502 are arranged on opposite longitudinal side walls of the support arrangement 501 to thereby form said pair of pinching elements. An insertion opening 507 is formed between the respective actuation portions 504. The insertion opening 507 extends along the full longitudinal length of the respective pinching elements 502. The insertion opening 507 allows insertion of a free end 202 of the setting member 201 into said insertion opening 507 when the pinching elements 502 are set to the first position. This will be further described below.

The width W of the insertion opening 507 is variable by each pinching element 502 being pivotable arranged around its respective pivot 503. Accordingly, as a result of the pivoting of the pinching elements 502, the width W of the insertion opening 507 will be adjusted. Thus, when increasing the width W of the insertion opening 507, the width between the free ends of the filter engagement portions 505 will be reduced.

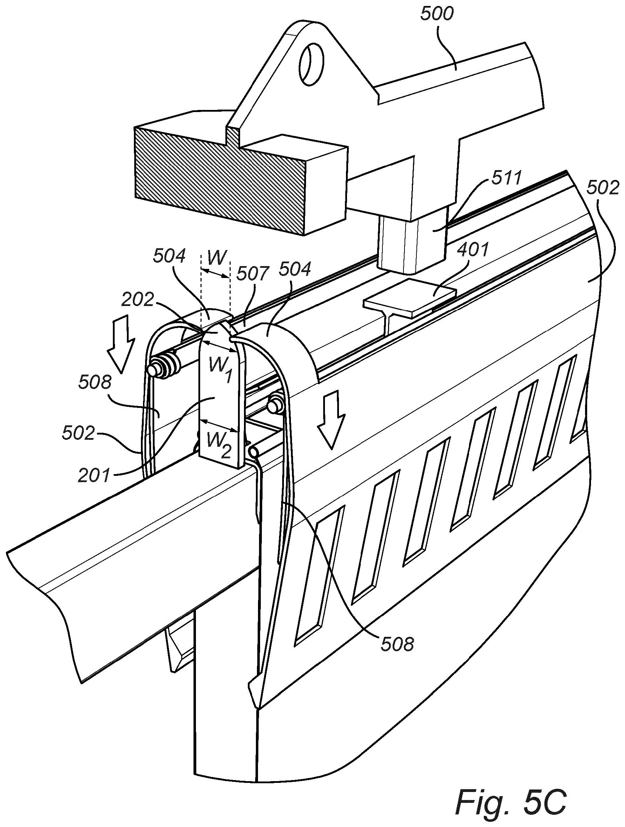

As is best seen in Fig. 5C, the pinching elements 502 in the pair of pinching elements are biased in a direction towards a first position. It is preferred that the pair of pinching elements 502, when set to said first position may straddle the two filter cloth portions 300 without any contact or with a minimum of frictional contact between the pinching elements 502 and the two filter cloth portions 300.

The biasing is provided by elastic members 508. The elastic members 508 may by way of example be a tension spring or a leaf spring. The skilled person will understand that other types of elastic members and positions may be used with remained function. An elastic member, not disclosed, may by way of example be arranged between the actuation portions 504.

The elastic member 508 may be encapsulated by a non-disclosed encapsulation. The encapsulation is useful to restrict or prevent dirt from intruding and negatively impacting the operation of the elastic member.

Now turning to Fig. 4 anew, the support arrangement 501 comprises two guiding members 509 which are configured to align the lifting frame 500 with the rail 200 when the lifting frame 500 is moved towards the filter support member 400. In the disclosed embodiment, the respective guiding member 509 is formed by two V-shaped projections 510 which are supported by or are integral with the opposite side wall portions 503 of the support arrangement 501. The V-shaped projections 510 are configured to straddle the rail 200 when the lifting frame 500 is lowered. By the V-shape, a self-guiding effect is achieved. The skilled person will realize that the same effect may be achieved if the guiding members are arranged on the rail 200 and the support arrangement is provided with mating projections. In the disclosed embodiment one guiding member 509 is arranged on each side of the filter support member 400.

In the event of more than one guiding member 509, it is preferred that these are symmetrically distributed along the longitudinal extension of the support arrangement 501 with one guiding member 509 on each side of an imaginary plane extending through a centre point of the support arrangement 501 and transverse to the longitudinal extension thereof.

In the disclosed embodiment, the respective pinching element 502 has a length that exceeds the length of the respective filter cloth portion 300 as seen in the longitudinal direction of the support arrangement 501. The two setting members 201 are configured to cooperate with free end portions of the respective pinching elements 502 which end portions extend past the free ends of the filter support member 400. Accordingly, the setting members 201 are arranged in a position outside the filter support member 400. One setting member 201 may be arranged on each side of the filter support member 400. The skilled person will however realize that it in some embodiments may be sufficient with one setting member 201 only. In the event of more than one setting member 201, it is preferred that these are symmetrically distributed along the filter support member 400 with one setting member 201 on each side of an imaginary plane extending through a centre point of the support arrangement 501 and transverse to the longitudinal extension thereof.

As is best seen in Fig. 5C, the support arrangement 501 comprises an electromagnetic member 511 which together with the magnetic target surface 401 of the filter support member 400 form part of a magnetic coupling.

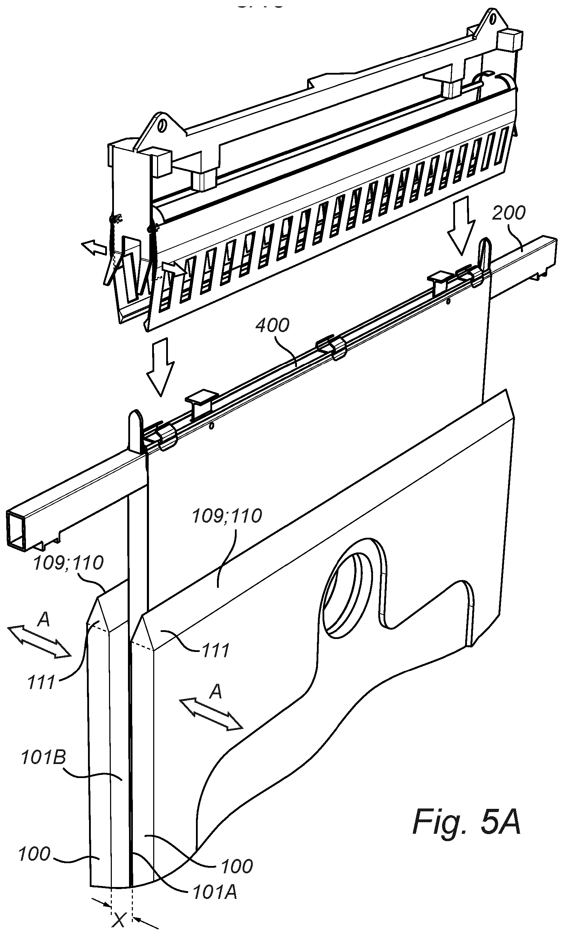

In the following the operation of the lifting system will be described with reference to Figs. 5A-5E.

Starting with Fig. 5A, the individual filter plates 100 have been moved apart by being displaced in a direction as indicated by arrows A. This displacement is provided for by a non-disclosed operation system forming part of the non-disclosed filter press. The filter plates 100 are displaced to form a gap X between the opposing major surfaces 101A, 101B in the pair of filter plates 100. The gap X is large enough for the filter cloth portions 300 to hang freely like curtains without any contact with the filter plates 100.

The filter cloth portions 300 are suspended on the filter support member 400 which in turn is supported by the rail 200 which is a part of the non-disclosed filter press. Hence, the rail 200 is fixedly mounted to the filter press. In its simplest form, the support member may rest freely on the longitudinal upper edge portion of the rail 200.

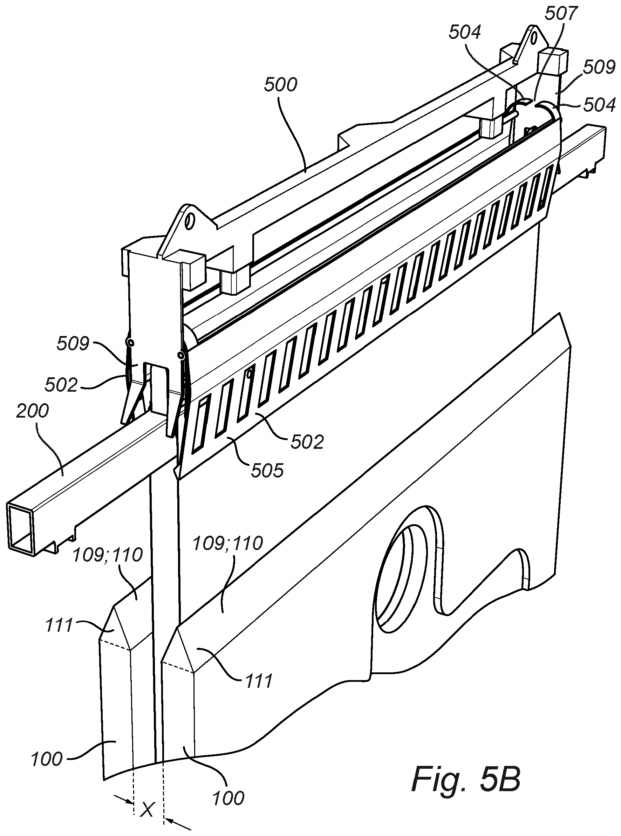

Now turning to Fig. 5B, to lift the pair of filter cloth portions 300 out from the gap X between the filter plates 100, the lifting frame 500 is lowered downwardly towards the rail 200. The lowering may be made by the lifting frame 500 being supported by a non-disclosed traverse, crane or suitable lifting arrangement. As the lifting frame 500 is lowered towards the rail 200, the two guiding members 509 are arranged to straddle the rail 200 to thereby align the lifting frame 500 with the rail 200. By the V-shape of the guiding members 509, a self-guiding effect is achieved during the lowering. Additionally, the bevels 110 that are formed along the upper edge portions 109 of the press plates 100 act as guiding portions that facilitates lowering of the lifting frame to allow insertion of the pinching elements in the gap X between the opposing press plates. The bevels 110 may be integral with the press plates 100 or be provided as caps 111 to be attached to the upper edge portion. The latter may be used as a retro-fit to existing press plates.

The respective pinching elements 502 are biased to their first position. In this first position the gap between the free ends of respective engagement portions 505 is big enough to allow the pinching elements 502 to straddle the two filter cloth portions 300 without any contact or with a minimum of contact between the pinching elements 502 and the filter cloth portions 300. Also, the longitudinally extending insertion opening 507 is formed between the respective actuation portions 504 in the pair of pinching elements 502.

Turning to Fig. 5C, a partial cross section of the lifting system is illustrated in the stage when the lifting frame 500 has been lowered to such extent that the respective actuation portions 504 of the pinching elements 502 comes in contact with the free end portion 202 of the setting member 201 which is fixedly mounted to the rail 200 and which projects from the rail 200 towards the lifting frame 500. To facilitate understanding, the guiding member has been removed. In this position, the free end portion 202 of the setting member 201 is inserted into the insertion opening 507 between the pair of pinching elements 502. In this illustration, insertion has not been made to such extent that the setting member 201 has initiated actuation of the pinching elements 502. Thus, the width W of the insertion opening 507 is still wider than the first width W1 of the free end portion 202 of the setting member 201.

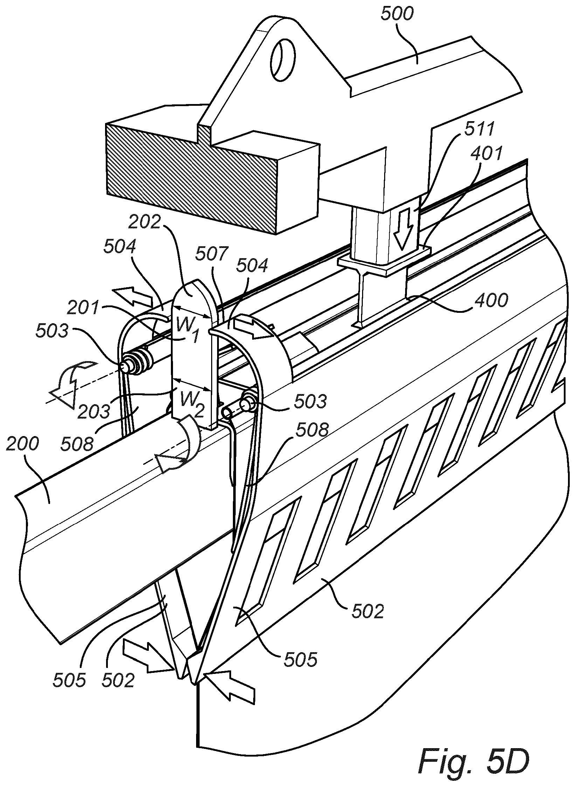

As the lifting frame 500 is further lowered, see Fig. 5D, the free ends of the respective actuation portions 504 of the pinching elements 502 will come in contact with the base portion 203 of the setting member 201 which base portion has a wider width W2 than the width W1 of the free end portion 202. The setting member 201 will hence act as a cam which forces the two pinching elements 502 to pivot around its respective pivot 503 to thereby allow the base portion 203 of the setting member 201 to be inserted through the insertion opening 507. At the same time, the distance between the free ends of the engagement portions 505 of the pinching elements 502 will be reduced. This causes the free ends of the engagement portions 505 of the pinching elements 502 to engage and displace the filter cloth portions 300 in a direction toward each other. The width W2 of the base portion 202 of the setting member 201 determines the distance between the displaced filter cloth portions 300. During this pivoting, the biasing provided by the elastic members 508 will be counteracted. Accordingly, during this movement, the pinching elements 502 will be set to their second position.

The pinching elements 502 engages the respective filter cloth portions 300 in a position below the rail 200. The pinching elements 502 may be configured to engage the respective filter cloth portion 300 in an area that allows the respective cloths to be displaced towards each other to such extent that a lateral clearance is provided between the respective filter plates 100 and the pair of filter cloth portions 300. Thus, in the displaced position, the gap between the two filter cloth portions 300 should be reduced to such extent that a pair of filter cloth portions 300 with or without any sealing members 302 supported by the filter cloth portions 300 may be lifted upwards without contacting the respective filter plates 100. In the disclosed embodiment, the two filter cloth portions 300 have been displaced to such degree that they substantially contact each other. The skilled person will realise that it in principle is sufficient to reduce the distance to ensure a clearance between the filter cloth portions 300 and their sealing members 302 and the opposing major surfaces 101A, 101B of the two filter plates 100.

As is further disclosed in Fig. 5D, the lifting frame 500 is lowered to such extent that the electromagnetic member 511 supported by the lifting frame 500 contacts the magnetic target surface 401 of the filter support member 400 which is arranged along the upper longitudinal edge portion of the rail 200. When a physical contact has been established between the electromagnetic member 511 and the magnetic target surface 401, the electromagnetic member 511 is activated to thereby provide a locking engagement between the filter support member 400 and the lifting frame 500. Presence of a physical contact may be detected by a non-disclosed pressure sensor. The electromagnetic member may be arranged in communication with a non-disclosed control unit.

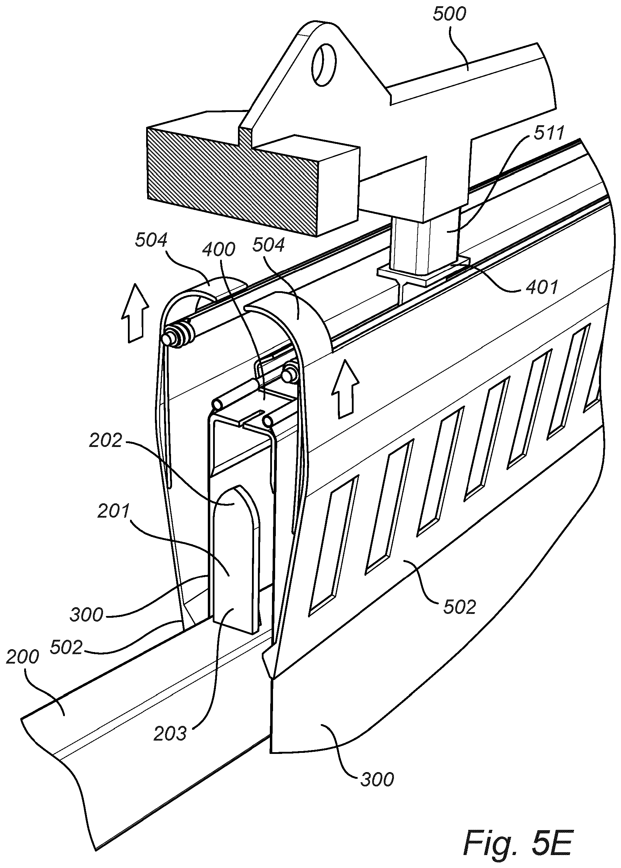

Now turning to Fig. 5E, the lifting operation is schematically disclosed. As the lifting frame 500 is raised, the filter support member 400 with the two suspended filter cloth portions 300 will be lifted in direction away from the rail 200. The lifting is allowed as a result of the locking engagement between the electromagnetic member 511 and the magnetic target surface 401 the magnetic coupling.

As the lifting continues, the biasing of the two pinching elements 502 will strive to set the pinching elements to their first positions. A reversed cam action will occur as the opposing free ends of the actuation portions 504 of the two pinching elements 502 are moved along the setting member 201 from the wider base portion 203 to the narrower free end portion 202. Thus, the pinching effect of the two filter cloth portions 300 will be released whereby the cloths may pass to a position above the rail 200.

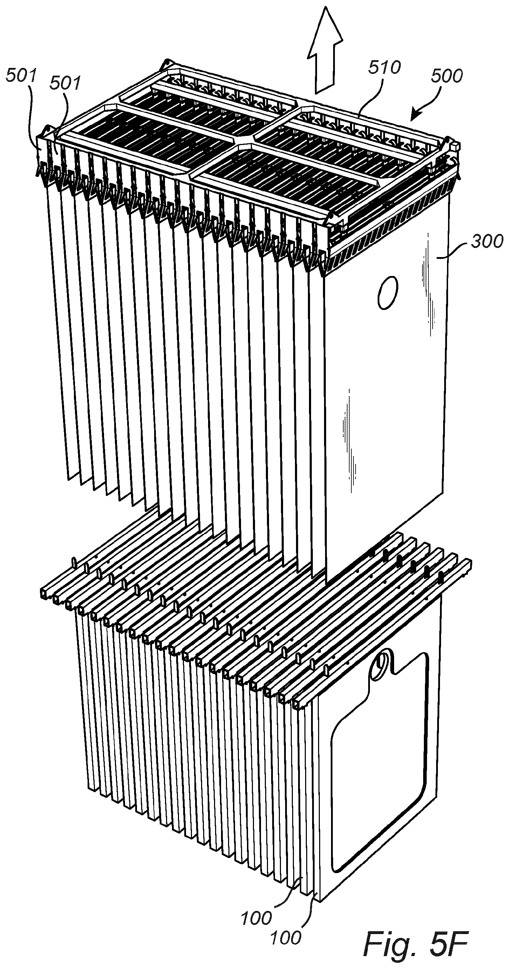

Now turning to Fig. 5F, one embodiment of such lifted position is illustrated. The embodiment in Fig. 5F differs from the embodiment in Figs. 5A-5D in that the lifting frame 500 comprises twenty support arrangements 501 which are connected by a common frame 510. The twenty support arrangements 501 serve twenty pairs of filter cloth portions 300 and hence twenty pairs of filter plates 100. The twenty pairs of filter plates may be a sub-set of a larger group of filter plates in the filter press. In this elevated position, the operator can easily get access to, inspect and replace the individual filter cloth portions 300. The lifting frame 500 is lifted by a non-disclosed traverse, crane or any other suitable lifting arrangement.

In summary, in its very broadest aspect as is disclosed in Figs. 5A-5F, the invention refers to a method of automatically lifting one or more filter cloth supports from a filter press where said filter support member suspends two parallelly extending filter cloth portions. In its broadest aspect, the method comprises the acts of: providing a lifting frame; moving the lifting frame in a direction towards the filter support member into a locking position with the lifting frame engaging the filter support member; activating a coupling thereby providing a locking engagement between the lifting frame and the filter support member; and elevating the lifting frame and the filter support member, thereby removing the filter support member from the filter press.

Figs 5A-5F also discloses additional features to facilitate the handling of the filter cloth portions in view of the press plates, where the lifting frame supports a pair of pinching elements, each pinching element being configured to be selectively set from a first position to a second position; moving the lifting frame in a direction towards the filter cloth support into a position where the pair of pinching elements straddles the two filter cloth portions; setting each pinching element from the first position to the second position in which the respective pinching elements engages one of the two filter cloth portions thereby displacing the two filter cloth portions in a direction towards each other; activating the coupling thereby providing a locking engagement between the lifting frame and the filter cloth support; and elevating the lifting frame and the filter cloth support, thereby removing the filter cloth support from the filter press.

The pair of filter cloth portions 300 have been described as two separate filter cloth portions 300 hanging side by side like curtains. The skilled person realises that the pair of filter cloth portions 300 with remained function may be provided as a U-shaped unit with two interconnected opposing filter cloth portions 300. More than one pairs of filter cloth portions 300 may be used, thereby forming four or more filter cloth portions 300. The respective filter cloth portions 300, no matter format, may be made of a single layer or have a multi-layered configuration.

In the embodiment referred to above, the coupling has been described as a magnetic coupling comprising an electromagnetic member which is arranged on the lifting frame and a magnetic target surface which is arranged on the filter cloth support. The skilled person will understand that the magnetic coupling in an alternative solution may comprise an electromagnetic member which is arranged on the filter cloth support and a magnetic target surface which is arranged on the lifting frame. By arranging the electromagnetic member on the lifting frame, the necessary wiring required to power the electromagnetic member may be supported by the lifting frame. This facilitates the overall operation of the lifting system since the power may be controlled by the same control system that is used to manoeuvre the lifting frame, such as a traverse, crane or any other suitable lifting arrangement.

In an alternative, non-disclosed embodiment, two or more pairs of pinching elements may be arranged side by side along the longitudinal extension of the filter cloth support. The number of setting members should be adapted to the number of pairs of pinching elements. Each pair of pinching elements should be configured to be operated by at least one setting element. In the case of one single pair of pinching elements which extends along the full longitudinal extension of the respective filter cloth, it may be preferred to provide at least two setting members in order of ensuring an even distance between the respective pinching elements as seen along the longitudinal extension.

It is to be understood that the coupling may be used in the reversed order, i.e. to release the locking engagement between the lifting frame and the filter support member when the filter support member is re-positioned in the filter press by using the lifting frame after maintenance/change of the filter cloth portions.

The foregoing description of the preferred embodiments has been furnished for illustrative and descriptive purposes. It is not intended to be exhaustive, or to limit the embodiments to the variants described. Many modifications and variations will obviously be apparent to one skilled in the art. The embodiments have been chosen and described in order to best explicate principles and practical applications, and to thereby enable one skilled in the art to understand the embodiments in terms of its various embodiments and with the various modifications that are applicable to its intended use. The components and features specified above may, within the framework of the embodiments, be combined between different embodiments specified.

## Claims

1. Lifting system for a filter press, comprising
a lifting frame (500) having one of an electromagnetic member (511) and a magnetic target surface (401),
a filter support member (400) having the other of the electromagnetic member (511) and the magnetic target surface (401) and being configured to be removably supported by a rail (200) in the filter press, said filter support member (400) being configured to suspend at least two parallelly extending filter cloth portions (300), and a magnetic coupling comprising the electromagnetic member (511) and the magnetic target surface (401), wherein
the lifting frame (500) is configured to be moved in a direction towards the filter support member (400) into a locking position in which the magnetic coupling (511; 401) is configured to be activated thereby interlocking the lifting frame (500) and the filter support member (400) and allowing lifting of the filter support member (400) and the filter cloth portions suspended thereby in a direction away from the rail (200).

2. The lifting system according to claim 1, wherein the lifting frame (500) comprises a support arrangement (501) supporting a pair of pinching elements (502), each pinching element (502) being pivotably suspended on the support arrangement (501) to be set from a first position to a second position.

3. The lifting system according to claim 2, further comprising a setting member (201); and during movement of the lifting frame (500) towards the filter support member (400), a portion of each pinching element (502) engages the setting member (201) thereby forcing each pinching element (502) to be set from the first position to the second position in which the respective pinching element (502) engages one of the two filter cloth portions (300) thereby displacing the two filter cloth portions (300) in a direction towards each other.

4. Lifting system according to claim 3, wherein each pinching element (502) along its longitudinal extension comprises an upper actuation portion (504) and a lower filter engagement portion (505) separated by a pivot (503), and wherein an insertion opening (507) is arranged between the respective actuation portions (504) in the pair of pinching elements (502) thereby allowing insertion of a free end (202) of the setting member (201) into said insertion opening (507) when the pinching elements (502) are set to the first position.

5. Lifting system according to claim 4, wherein the width of the insertion opening (507) is variable by each pinching element (502) being pivotable arranged around its respective pivot (503).

6. Lifting system according to claim 3, wherein the setting member (201) is a projection comprising a base portion (203) having a first width (W2) and a free end portion (202) facing the lifting frame (500), said free end portion (202) having a second width (W1) being smaller than the first width (W2).

7. Lifting system according to any of claims 2-6, wherein the pinching elements (502) in the pair of pinching elements (502) are biased in a direction towards the first position.

8. Lifting system according to any of claims 2-7, wherein the pinching elements (502) in the pair of pinching elements (502) have an extension along the full longitudinal extension of the respective filter cloth portion (300), or wherein two or more pairs of pinching elements (502) are distributed along the longitudinal extension of the filter support member (400).

9. Lifting system according to any of claims 3-8, wherein the respective pinching elements (502) have a length that exceeds the length of the respective filter cloth portion (300) as seen in the longitudinal direction of the support arrangement (501), and the setting member (201) is configured to cooperate with an end portion of the respective pinching elements (502) which extend past a corresponding free end of the respective filter cloth portion (300).

10. Lifting system according to any of the preceding claims,
wherein the electromagnetic member (511) is arranged on the lifting frame (500) and the magnetic target surface (401) is arranged on the filter support member (400).

11. Lifting system according to any of the preceding claims, wherein the lifting frame (500) or the rail (200) in the filter press comprises at least one guiding member (509) configured to align the lifting frame (500) with the filter support member (400) when the lifting frame (500) is moved towards the filter support member (400).

12. Lifting system according to any of the preceding claims, wherein the lifting frame (500) comprises a plurality of support arrangements (501), each support arrangement (501) supporting a pair of pinching elements (502).

13. Lifting system according to any of claims 2-12, wherein the pinching elements (502) are configured to engage the respective filter cloth portions (300) in a position below the rail (200).

14. Method of automatically lifting one or more filter support members (400) from
a filter press,
said filter support member (400) having one of an electromagnetic member (511) and a magnetic target surface (401) and suspending two parallelly extending filter cloth portions (300), the method comprising the acts of:
providing a lifting frame (500) having the other of the electromagnetic member (511) and the magnetic target surface (401);
moving the lifting frame (500) in a direction towards the filter support member (400) into a locking position with the lifting frame (500) engaging the filter support member (400);
activating a magnetic coupling comprising the electromagnetic member (511) and the magnetic target surface (401) thereby providing a locking engagement between the lifting frame (500) and the filter support member (400); and
elevating the lifting frame (500) and the filter support member (400), thereby removing the filter support member (400) and the filter cloth portions (300) from the filter press.

15. The method of claim 14, wherein the lifting frame (500) supports a pair of pinching elements (502), each pinching element (502) being configured to be reversible and selectively set from a first position to a second position;
wherein the lifting frame (500) is moved towards the filter support member (400) into a position where the pair of pinching elements (502) straddles the two filter cloth portions (300); and wherein
each pinching element (502) is set from the first position to the second position in which the respective pinching elements (502) engages one of the two filter cloth portions (300) thereby displacing the two filter cloth portions (300) in a direction towards each other.

16. The method according to claim 15, wherein a portion of each pinching element (502) in the pair of pinching elements (502) is configured to engage a setting member (201) during movement of the lifting frame (500) into the position where the pair of pinching elements (502) straddles the two filter cloth portions (300), thereby forcing each pinching element (502) to be pivotably set from the first position to the second position.

## Patentansprüche

1. Hebesystem für eine Filterpresse, umfassend einen Heberahmen (500), der eines von einem elektromagnetischen Glied (511) und einer magnetischen Zielfläche (401) aufweist, ein Filterstützglied (400), das das andere von dem elektromagnetischen Glied (511) und der magnetischen Zielfläche (401) aufweist und das von einer Schiene (200) in der Filterpresse entfernbar gestützt ausgestaltet ist, wobei das Filterstützglied (400) dazu ausgestaltet ist, dass daran mindestens zwei sich parallel erstreckende Filtertuchabschnitte (300) aufgehängt sind, und eine magnetische Koppelung, die das elektromagnetische Glied (511) und die magnetische Zielfläche (401) umfasst, wobei der Heberahmen (500) dazu ausgestaltet ist, in einer Richtung zu dem Filterstützglied (400) hin in eine Verriegelungsposition bewegt zu werden, in der die magnetische Koppelung (511; 401) zur Betätigung ausgestaltet ist, wodurch der Heberahmen (500) und das Filterstützglied (400) miteinander verriegelt werden und gestattet wird, dass das Filterstützglied (400) und die daran aufgehängten Filtertuchabschnitte dadurch in einer vom Schiene (200) weg gerichteten Richtung.

2. Hebesystem nach Anspruch 1, wobei der Heberahmen (500) eine Stützanordnung (501) umfasst, die ein Paar Kneifelemente (502) stützt, wobei jedes Kneifelement (502) schwenkbar an der Stützanordnung (501) aufgehängt ist, um von einer ersten Position in eine zweite Position gestellt zu werden.

3. Hebesystem nach Anspruch 2, weiter umfassend ein Einstellglied (201); und wobei während der Bewegung des Heberahmens (500) zu dem Filterstützglied (400) hin ein Abschnitt jedes Kneifelements (502) das Einstellglied (201) in Eingriff nimmt, wodurch jedes Kneifelement (502) dazu gezwungen wird, von der ersten Position in die zweite Position gestellt zu werden, in der das jeweilige Kneifelement (502) einen der beiden Filtertuchabschnitte (300) in Eingriff nimmt, wodurch die beiden Filtertuchabschnitte (300) in eine Richtung aufeinander zu verschoben werden.

4. Hebesystem nach Anspruch 3, wobei jedes Kneifelement (502) entlang seiner Längserstreckung einen oberen Betätigungsabschnitt (504) und einen unteren Filtereingriffsabschnitt (505) umfasst, die durch einen Schwenkzapfen (503) getrennt sind, und wobei zwischen den jeweiligen Betätigungsabschnitten (504) in dem Paar Kneifelemente (502) eine Einführöffnung (507) angeordnet ist, wodurch das Einführen eines freien Endes (202) des Einstellglieds (201) in die Einführöffnung (507) gestattet ist, wenn die Kneifelemente (502) in die erste Position gestellt sind.

5. Hebesystem nach Anspruch 4, wobei die Breite der Einführöffnung (507) variabel ist, indem jedes Kneifelement (502) um seinen jeweiligen Schwenkzapfen (503) schwenkbar angeordnet ist.

6. Hebesystem nach Anspruch 3, wobei das Einstellglied (201) ein Vorsprung ist, der einen Basisabschnitt (203) mit einer ersten Breite (W2) und einen freien Endabschnitt (202) umfasst, der dem Heberahmen (500) zugewandt ist, wobei der freie Endabschnitt (202) eine zweite Breite (W1) hat, die kleiner als die erste Breite (W2) ist.

7. Hebesystem nach einem der Ansprüche 2-6, wobei die Kneifelemente (502) in dem Paar Kneifelemente (502) in einer Richtung zu der ersten Position hin vorgespannt sind.

8. Hebesystem nach einem der Ansprüche 2-7, wobei die Kneifelemente (502) in dem Paar Kneifelemente (502) eine Erstreckung entlang der gesamten Längserstreckung des jeweiligen Filtertuchabschnitts (300) haben oder wobei zwei oder mehr Paare Kneifelemente (502) entlang der Längserstreckung des Filterstützglieds (400) verteilt sind.

9. Hebesystem nach einem der Ansprüche 3-8, wobei die jeweiligen Kneifelemente (502) eine Länge haben, die die Länge des jeweiligen Filtertuchabschnitts (300) in der Längsrichtung der Stützanordnung (501) gesehen überschreitet, und das Einstellglied (201) dazu ausgestaltet ist, mit einem Endabschnitt der jeweiligen Kneifelemente (502) zusammenzuwirken, die sich an einem entsprechenden freien Ende des jeweiligen Filtertuchabschnitts (300) vorbei erstrecken.

10. Hebesystem nach einem der vorhergehenden Ansprüche, wobei das elektromagnetische Glied (511) an dem Heberahmen (500) angeordnet ist und die magnetische Zielfläche (401) an dem Filterstützglied (400) angeordnet ist.

11. Hebesystem nach einem der vorhergehenden Ansprüche, wobei der Heberahmen (500) oder die Schiene (200) in der Filterpresse mindestens ein Führungsglied (509) umfasst, das dazu ausgestaltet ist, den Heberahmen (500) auf das Filterstützglied (400) auszurichten, wenn der Heberahmen (500) zu dem Filterstützglied (400) hin bewegt wird.

12. Hebesystem nach einem der vorhergehenden Ansprüche, wobei der Heberahmen (500) eine Vielzahl von Stützanordnungen (501) umfasst, wobei jede Stützanordnung (501) ein Paar Kneifelemente (502) stützt.

13. Hebesystem nach einem der Ansprüche 2-12, wobei die Kneifelemente (502) dazu ausgestaltet sind, die jeweiligen Filtertuchabschnitte (300) in einer Position unter der Schiene (200) in Eingriff zu nehmen.

14. Verfahren zum automatischen Anheben eines oder mehrerer Filterstützglieder (400) von einer Filterpresse,
wobei das Filterstützglied (400) eines von einem elektromagnetischen Glied (511) und einer magnetischen Zielfläche (401) aufweist und zwei sich parallel erstreckende Filtertuchabschnitte (300) daran hängen, wobei das Verfahren folgende Schritte umfasst:
Bereitstellen eines Heberahmens (500), der das andere von dem elektromagnetischen Glied (511) und der magnetischen Zielfläche (401) aufweist;
Bewegen des Heberahmens (500) in eine Richtung auf das Filterstützglied (400) zu in eine Verriegelungsposition, wobei der Heberahmen (500) das Filterstützglied (400) in Eingriff nimmt;
Betätigen einer magnetischen Koppelung, die das elektromagnetische Glied (511) und die magnetische Zielfläche (401) umfasst, wodurch für ein Verriegelungseingriff zwischen dem Heberahmen (500) und dem Filterstützglied (400) gesorgt wird; und
Anheben des Heberahmens (500) und des Filterstützglieds (400), wodurch das Filterstützglied (400) und die Filtertuchabschnitte (300) von der Filterpresse entfernt werden.

15. Verfahren nach Anspruch 14, wobei der Heberahmen (500) ein Paar Kneifelemente (502) stützt, wobei jedes Kneifelement (502) reversibel und gezielt von einer ersten Position in eine zweite Position gestellt ausgestaltet ist;
wobei der Heberahmen (500) zu dem Filterstützglied (400) hin in eine Position bewegt wird, in der das Paar Kneifelemente (502) die beiden Filtertuchabschnitte (300) überspreizt; und wobei
jedes Kneifelement (502) von der ersten Position in die zweite Position gestellt wird, in der die jeweiligen Kneifelemente (502) einen der beiden Filtertuchabschnitte (300) in Eingriff nehmen, wodurch die beiden Filtertuchabschnitte (300) in eine Richtung aufeinander zu verschoben werden.

16. Verfahren nach Anspruch 15, wobei ein Abschnitt jedes Kneifelements (502) in dem Paar Kneifelemente (502) dazu ausgestaltet ist, während der Bewegung des Heberahmens (500) in die Position, in der das Paar Kneifelemente (502) die beiden Filtertuchabschnitte (300) überspreizt, ein Einstellglied (201) in Eingriff zu nehmen, wodurch jedes Kneifelement (502) dazu gezwungen wird, schwenkbar von der ersten Position in die zweite Position gestellt zu werden.

## Revendications

1. Système de levage pour un filtre-presse, comprenant un cadre de levage (500) présentant l'un parmi un organe électromagnétique (511) et une surface cible magnétique (401), un organe de support de filtre (400) présentant l'autre de l'organe électromagnétique (511) et de la surface cible magnétique (401) et étant configuré pour être supporté de manière amovible par un rail (200) dans le filtre-presse, ledit organe de support de filtre (400) étant configuré pour suspendre au moins deux parties de toile filtrante (300) s'étendant parallèlement, et un couplage magnétique comprenant l'organe électromagnétique (511) et la surface cible magnétique (401), dans lequel le cadre de levage (500) est configuré pour être déplacé dans une direction vers l'organe de support de filtre (400) dans une position de verrouillage dans laquelle le couplage magnétique (511 ; 401) est configuré pour être activé verrouillant ainsi mutuellement le cadre de levage (500) et l'organe de support de filtre (400) et permettant ainsi le levage de l'organe de support de filtre (400) et des parties de toile filtrante suspendues dans une direction s'éloignant du rail (200).

2. Système de levage selon la revendication 1, dans lequel le cadre de levage (500) comprend un agencement de support (501) supportant une paire d'éléments de pincement (502), chaque élément de pincement (502) étant suspendu de façon pivotante sur l'agencement de support (501) pour être réglé d'une première position à une seconde position.

3. Système de levage selon la revendication 2, comprenant en outre un organe de réglage (201) ; et pendant le mouvement du cadre de levage (500) vers l'organe de support de filtre (400), une partie de chaque élément de pincement (502) vient en prise dans l'organe de réglage (201) forçant ainsi chaque élément de pincement (502) à être réglé de la première position à la seconde position dans laquelle l'élément de pincement (502) respectif met en prise l'une des deux parties de toile filtrante (300) déplaçant ainsi les deux parties de toile filtrante (300) dans une direction l'une vers l'autre.

4. Système de levage selon la revendication 3, dans lequel chaque élément de pincement (502) le long de son extension longitudinale comprend une partie d'actionnement supérieure (504) et une partie de mise en prise de filtre inférieure (505) séparées par un pivot (503), et dans lequel une ouverture d'insertion (507) est agencée entre les parties d'actionnement respectives (504) dans la paire d'éléments de pincement (502) permettant ainsi l'insertion d'une extrémité libre (202) de l'organe de réglage (201) dans ladite ouverture d'insertion (507) lorsque les éléments de pincement (502) sont réglés sur la première position.

5. Système de levage selon la revendication 4, dans lequel la largeur de l'ouverture d'insertion (507) est variable en ce que chaque élément de pincement (502) est agencé de façon pivotante autour de son pivot (503) respectif.

6. Système de levage selon la revendication 3, dans lequel l'organe de réglage (201) est une saillie comprenant une partie de base (203) présentant une première largeur (W2) et une partie d'extrémité libre (202) faisant face au cadre de levage (500), ladite partie d'extrémité libre (202) présentant une seconde largeur (W1) qui est inférieure à la première largeur (W2).

7. Système de levage selon l'une quelconque des revendications 2 à 6, dans lequel les éléments de pincement (502) dans la paire d'éléments de pincement (502) sont sollicités dans une direction vers la première position.

8. Système de levage selon l'une quelconque des revendications 2 à 7, dans lequel les éléments de pincement (502) dans la paire d'éléments de pincement (502) présentent une extension le long de toute l'extension longitudinale de la partie de toile filtrante (300) respective, ou dans lequel deux ou plus de deux paires d'éléments de pincement (502) sont réparties le long de l'extension longitudinale de l'organe de support de filtre (400).

9. Système de levage selon l'une quelconque des revendications 3 à 8, dans lequel les éléments de pincement (502) respectifs présentent une longueur qui dépasse la longueur de la partie de toile filtrante (300) respective telle que vue dans la direction longitudinale de l'agencement de support (501), et l'organe de réglage (201) est configuré pour coopérer avec une partie d'extrémité des éléments de pincement (502) respectifs qui s'étendent au-delà d'une extrémité libre correspondante de la partie de toile filtrante (300) respective.

10. Système selon l'une quelconque des revendications précédentes, dans lequel l'organe électromagnétique (511) est agencé sur le cadre de levage (500) et la surface cible magnétique (401) est agencée sur l'organe de support de filtre (400).

11. Système selon l'une quelconque des revendications précédentes, dans lequel le cadre de levage (500) ou le rail (200) dans le filtre-presse comprend au moins un organe de guidage (509) configuré pour aligner le cadre de levage (500) avec l'organe de support de filtre (400) lorsque le cadre de levage (500) est déplacé vers l'organe de support de filtre (400).

12. Système selon l'une quelconque des revendications précédentes, dans lequel le cadre de levage (500) comprend une pluralité d'agencements de support (501), chaque agencement de support (501) supportant une paire d'éléments de pincement (502).

13. Système de levage selon l'une quelconque des revendications 2 à 12, dans lequel les éléments de pincement (502) sont configurés pour mettre en prise les parties de toile filtrante (300) respectives dans une position sous le rail (200).

14. Procédé de levage automatique d'un ou de plusieurs organes de support de filtre (400) à partir d'un filtre-presse,
ledit organe de support de filtre (400) présentant l'un d'un organe électromagnétique (511) et d'une surface cible magnétique (401) et suspendant deux parties de toile filtrante (300) s'étendant parallèlement, le procédé comprenant :
la fourniture d'un cadre de levage (500) présentant l'autre de l'organe électromagnétique (511) et de la surface cible magnétique (401) ;
le déplacement du cadre de levage (500) dans une direction vers l'organe de support de filtre (400) dans une position de verrouillage avec le cadre de levage (500) venant en prise avec l'organe de support de filtre (400) ;
l'activation d'un couplage magnétique comprenant l'organe électromagnétique (511) et la surface cible magnétique (401) fournissant ainsi une mise en prise de verrouillage entre le cadre de levage (500) et l'organe de support de filtre (400) ; et
l'élévation du cadre de levage (500) et de l'organe de support de filtre (400), retirant ainsi l'organe de support de filtre (400) et les parties de toile filtrante (300) du filtre-presse.

15. Procédé selon la revendication 14, dans lequel le cadre de levage (500) supporte une paire d'éléments de pincement (502), chaque élément de pincement (502) étant configuré pour être réversible et réglé sélectivement d'une première position à une seconde position ;
dans lequel le cadre de levage (500) est déplacé vers l'organe de support de filtre (400) dans une position où la paire d'éléments de pincement (502) chevauche les deux parties de toile filtrante (300) ; et dans lequel
chaque élément de pincement (502) est réglé de la première position à la seconde position dans laquelle les éléments de pincement (502) respectifs viennent en prise avec l'une des deux parties de toile filtrante (300) déplaçant ainsi les deux parties de toile filtrante (300) dans une direction l'une vers l'autre.

16. Procédé selon la revendication 15, dans lequel une partie de chaque élément de pincement (502) dans la paire d'éléments de pincement (502) est configurée pour mettre en prise un organe de réglage (201) pendant le mouvement du cadre de levage (500) dans la position où la paire d'éléments de pincement (502) chevauche les deux parties de toile filtrante (300), forçant ainsi chaque élément de pincement (502) à être réglé de manière pivotante de la première position à la seconde position.
